# EUROPÄISCHE PATENTANMELDUNG

(11) **EP 1 422 039 A2**
(43) Veröffentlichungstag der Anmeldung: **26.05.2004**
(21) Anmeldenummer: 03022013.1
(22) Anmeldetag: 30.09.2003
(51) Int. Cl.: B29C 44/14, B29C 44/58

(54) **Verfahren und Vorrichtung zur Herstellung eines mit einer genarbten oder strukturierten Formhaut fest verbundenen Formkörpers**

(30) Priorität: 19.11.2002 DE 10253725
(71) Anmelder: Benecke-Kaliko Aktiengesellschaft, D-30419 Hannover (DE)
(72) Erfinder: Gerken, Dr. Andreas, 30161 Hannover (DE); Vogt, Günter, 31737 Rinteln (DE)
(74) Vertreter: Patentanwälte Thömen & Körner

(57) **Zusammenfassung**

Die Erfindung betrifft ein Verfahren zur Herstellung eines mit einer genarbten Formhaut fest verbundenen Formkörpers. Erfindungsgemäß wird hierzu eine räumlich geformte und elastische Haut (3), die auf ihrer Innenseite eine Narbung oder Strukturierung aufweist, in eine einseitig offene Aufnahmeform (7) eines Werkzeugunterteils eingelegt. Daraufhin wird eine flüssige Kunststoffschicht auf die genarbte Innenseite (3a) der elastischen Haut (3) aufgetragen, welche nach dem Aushärten die Formhaut (15) bildet. Daraufhin wird die Formhaut hinterschäumt, wobei sich der geschäumte Kunststoff fest mit der Formhaut verbindet. Anschließend wird der gesamte Verbund aus elastischer Haut (3), Formhaut (15) und Formkörper aus der Aufnahmeform (7) des Werkzeugunterteils herausgenommen. Schließlich wird die elastische Haut (3) von der mit dem Formkörper fest verbundenen Formhaut (15) abgezogen, wobei auf der Oberfläche der Formhaut (15) eine Narbung oder Strukturierung zurückbleibt.

## Beschreibung

Die Erfindung betrifft ein Verfahren zur Herstellung eines mit einer genarbten oder strukturierten Formhaut fest verbundenen Formkörpers sowie eine Vorrichtung zur Durchführung eines solchen Verfahrens.

Es sind zahlreiche Verfahren und Vorrichtungen zur Herstellung eines mit einer genarbten oder strukturierten Formhaut fest verbundenen Formkörpers, insbesondere von hinterschäumten oder von hinterschäumten und mit einem Träger versehenen Formhäuten, bekannt.

Alle bekannten Vorrichtungen und Verfahren zur Herstellung eines mit einer genarbten oder strukturierten Formhaut fest verbundenen Formkörpers sind in ihrer Handhabung sehr aufwendig und verursachen hohe Kosten. Insbesondere müssen zahlreiche Maschinen und Werkzeuge vorgehalten werden, die häufig keinen einheitlichen Qualitätsstandard bei der Herstellung des mit einer genarbten oder strukturierten Formhaut fest verbundenen Formkörpers garantieren. Insbesondere hat sich gezeigt, dass die Qualität oder Wertanmutung der sichtbaren Narbung oder Strukturierung der Formhaut aufgrund der Verwendung ungeeigneter Werkzeuge nicht reproduzierbar ist. Außerdem kommt es häufig zu Beschädigungen an der Narbung oder Strukturierung der Formhaut, insbesondere dann, wenn die genarbte oder strukturierte Formhaut transportiert oder mit einem Formkörper verbunden wird und mit diesem oder allein aus dem verwendeten Werkzeug herausgenommen wird. Dadurch entstehen mit Fehlern behaftete, unbrauchbare Produkte, die hohe Kosten verursachen. Auch die Gestaltungsmöglichkeiten des mit einer genarbten oder strukturierten Formhaut fest verbundenen Formkörpers sind bei den derzeit verwendeten Verfahren und Vorrichtungen sehr beschränkt. Änderungen in der Gestaltung lassen sich nur durch einen aufwendigen und teuren Umbau der Werkzeuge oder durch eine Neuherstellung von Werkzeugen realisieren.

Aus der US 5,116,557 ist beispielsweise ein Verfahren zur Herstellung von dreidimensionalen Formhäuten bekannt, bei dem ein flüssiges reaktives Polyurethangemisch auf die Oberfläche einer vorgeformten Metallform aufgesprüht wird und mit einem zusätzlichen Polyurethanschaum und zusätzlichen festen Trägern versehen werden kann. Nachteilig an diesem Verfahren ist, dass geometrisch anspruchsvolle Bauteile, insbesondere solche mit Hinterschnitten, nur über mehrteilige Werkzeugformen realisiert werden können, wobei sich die Trennungslinien der verschiedenen Werkzeugbestandteile auf der Oberfläche der Formhaut abzeichnen. Das Abzeichnen der Trennungslinien nimmt hierbei mit steigender Werkzeugabnutzung zu. Nachteilig ist außerdem, dass auf die Metallform üblicherweise zunächst ein Trennmittel aufgetragen werden muss, um die durch Aufsprühen des flüssigen Polyurethans hergestellte Formhaut nach dem Aushärten von der Metallform unbeschädigt lösen zu können. Das Trennmittel führt hierbei auch nachteilig zu einer Beeinträchtigung der Qualität und des ästhetischen Eindrucks der Formhautoberfläche, wobei die Oberfläche insbesondere einen zu hohen oder ungleichmäßigen Glanz aufweist.

Die gleichen Nachteile treten bei einem aus der US 5,662,996 bekannten Verfahren zur Herstellung eines mit einer Polyurethanhaut fest verbundenen Formkörpers auf. Bei diesem Verfahren wird zunächst eine elastomere Polyurethanformhaut nach dem in der US 5,116,557 beschriebenen Sprühverfahren hergestellt. Anschließend wird diese Polyurethanformhaut mit einem Polyurethanschaum und schließlich mit einem festen Träger versehen, wobei der Träger durch ein Zweikomponenten-Polyurethansystem gebildet wird.

In der DE 43 21 920 A1 wird ein Verfahren zur Herstellung von Polyurethan-Gießhäuten beschrieben, die mit einem Schaum und einem festen Trägermaterial versehen werden können. Es hat sich als vorteilhaft herausgestellt, dass dieses Verfahren in nur einer Aufnahmeform eines Werkzeugunterteils durchgeführt werden kann, was erhebliche Werkzeugkosten einspart. Allerdings ist hierbei die Herstellung geometrisch anspruchsvoller Bauteile, beispielsweise solcher mit Hinterschnitten, nur möglich, wenn mehrteilige Werkzeuge eingesetzt werden. Hierbei werden aber nachteilig Werkzeugstoßkanten auf der Oberfläche der Polyurethangießhaut sichtbar. Ein weiterer Nachteil besteht auch hier darin, dass üblicherweise Trennmittel eingesetzt werden müssen, um eine Herauslösen des Bauteils aus der Aufnahmeform des Werkzeugunterteils zu ermöglichen. Die Verwendung eines Trennmittels hat aber einen negativen Einfluss auf den gewünschten Glanzgrad der Oberfläche. Die sichtbaren Stoßkanten führen auch dazu, dass die Gestaltungsmöglichkeiten der sichtbaren Seite der Polyurethan-Gießhaut deutlich eingeschränkt werden.

Aus der DE 100 59 762 A1 ist ein Verfahren bekannt, bei dem in einem Formwerkzeug eine Dekorhaut, insbesondere eine Slushhaut, drucklos verschäumt und mit einem Träger versehen wird. Vorteilhaft ist hier kein Wechsel des Formwerkzeugs erforderlich. Nachteilig ist jedoch, dass keine geometrisch anspruchsvollen Hinterschnitte, wie sie üblicherweise bei Instrumententafeln vorkommen, möglich sind, da sich das steife Bauteil nicht aus dem Werkzeug entnehmen lässt. Zwar können zu diesem Zweck so genannte Auswerfer eingesetzt werden, wie sie beispielsweise in der DE 100 22 646 A1 beschrieben werden, jedoch hat dies wiederum starke designerische und konstruktive Einschränkungen zur Folge.

Der Erfindung liegt daher die Aufgabe zugrunde, ein Verfahren der eingangs genannten Art derart zu verbessern, dass die Herstellung des mit einer genarbten oder strukturierten Formhaut fest verbundenen Formkörpers in wirtschaftlicher Weise mit möglichst wenigen Werkzeugen erfolgt, wobei mehr Gestaltungsmöglichen hinsichtlich der Narbung oder Strukturierung der Formhaut einerseits und der geometrischen Ausgestaltung des fertig hergestellten mit der Formhaut fest verbundenen Formkörpers andererseits gegeben sein müssen. Insbesondere soll das Verfahren dahingehend verbessert werden, dass neu entwickelte oder geänderte Gestaltungen der Formhaut und des mit dieser fest verbundenen Formkörpers schneller in die Praxis umgesetzt werden können, ohne dass aufwendige Änderungen der verwendeten Werkzeuge notwendig sind.

Der Erfindung liegt außerdem die Aufgabe zugrunde, ein Verfahren der eingangs genannten Art derart zu verbessern, dass die fertig hergestellten, mit der Formhaut fest verbundenen Formkörper eine einheitliche und verbesserte Qualität sowie Wertanmutung, insbesondere hinsichtlich ihrer sichtbaren Narbung oder Strukturierung aufweisen.

Es ist eine weitere Aufgabe der Erfindung, eine Vorrichtung zur Durchführung eines derartigen Verfahrens anzugeben, die zahlreiche Gestaltungsmöglichkeiten des mit einer genarbten oder strukturierten Formhaut fest verbundenen Formkörpers ermöglicht, ohne dass die Vorrichtung aufwendig umgebaut werden muss.

Es ist außerdem eine Aufgabe der Erfindung, einen mit einer genarbten oder strukturierten Formhaut fest verbundenen Formkörper bereitzustellen, der reproduzierbar herstellbar ist und eine einheitliche und verbesserte Qualität sowie Wertanmutung, insbesondere hinsichtlich der sichtbaren Narbung oder Strukturierung aufweist.

Erfindungsgemäß werden diese Aufgaben bei einem Verfahren zur Herstellung eines mit einer genarbten oder strukturierten Formhaut fest verbundenen Formkörpers durch folgende Merkmale gemäß Anspruchs 1 gelöst:
a) Einlegen einer räumlich geformten und elastischen Haut, die auf ihrer Innenseite eine Narbung oder Strukturierung aufweist, in eine einseitig offene Aufnahmeform eines Werkzeugunterteils, derart, dass die elastische Haut mit ihrer Außenseite an der Innenwand der Aufnahmeform anliegt und durch diese Innenwand stabilisiert wird,
b) Auftragen einer flüssigen Kunststoffschicht in vorgegebener Schichtdicke auf die genarbte oder strukturierte Innenseite der elastischen Haut,
c) Aushärten der Kunststoffschicht, wobei sich die Formhaut bildet,
d) Hinterschäumen der Formhaut zur Bildung des Formkörpers und einer festen Verbindung zwischen Formkörper und Formhaut durch Einbringen geeigneter reaktiver Schäumungsmittel in einen Zwischenraum, der durch die Innenseite der Formhaut und ein in die Aufnahmeform des Werkzeugunterteils eingefügtes, räumlich geformtes Werkzeugoberteil begrenzt wird, wobei die Ausmaße des Zwischenraums und damit des Formkörpers von den Konturen der Formhaut und des Werkzeugoberteils vorgegeben werden, und wobei der Zwischenraum während des Schäumungsprozesses von dem Werkzeugoberteil abgedichtet wird,
e) Herausnehmen der gesamten Verbundes aus elastischer Haut, Formhaut und Formkörper aus der Aufnahmeform des Werkzeugunterteils, wobei das Werkzeugoberteil entweder vor oder nach dem Herausnehmen des gesamten Verbundes entfernt wird und
f) Abziehen der elastischen Haut von der mit dem Formkörper fest verbundenen Formhaut, wobei auf der Oberfläche der Formhaut nach dem Abziehen der elastischen Haut eine Narbung oder Strukturierung zurückbleibt.

Bei dem beschriebenen erfindungsgemäßen Verfahren ist die Herstellung des mit einer genarbten oder strukturierten Formhaut fest verbundenen Formkörpers in wirtschaftlicher Weise mit nur einer Aufnahmeform eines Werkzeugunterteils möglich, wobei durch das Einlegen der räumlich geformten und elastischen Haut in die Aufnahmeform mehr Gestaltungsmöglichen hinsichtlich der Narbung oder Strukturierung der Formhaut einerseits und der geometrischen Ausgestaltung des fertig hergestellten, mit der Formhaut fest verbundenen Formkörpers andererseits gegeben sind. Wesentlich ist hierbei, dass die räumlich geformte und elastische Haut mit ihrer Außenseite an der Innenwand der Aufnahmeform anliegt, wobei sich die konkrete Ausgestaltung der Innenwand der Aufnahmeform in keiner Weise negativ auf die genannten Gestaltungsmöglichkeiten auswirkt, da sich die möglicherweise vorhandenen Kanten von beispielsweise Schiebern, Klappen oder Auswerfern, die in der Aufnahmeform des Werkzeugunterteils angeordnet sind, nicht auf der Formhaut abzeichnen. Dies wird sicher durch die in die Aufnahmeform eingelegte, räumlich geformte und elastische Haut verhindert.

Es wird deutlich, dass dadurch eine in dem erfindungsgemäßen Verfahren verwendete Aufnahmeform des Werkzeugunterteils sehr schnell an unterschiedliche Konturen der räumlich geformten und elastischen Haut angepasst werden kann. Somit besteht die Möglichkeit, auch geometrisch anspruchsvolle, mit der Formhaut fest verbundene Formkörper herzustellen, die insbesondere komplizierte Hinterschnitte aufweisen können. Besonders vorteilhaft ist hierbei aber, dass neu entwickelte oder geänderte Gestaltungen der Formhaut und des mit dieser fest verbundenen Formkörpers schneller in die Praxis umgesetzt werden können, ohne dass aufwendige Änderungen der verwendeten Werkzeuge notwendig sind.

Außerdem wird mit dem erfindungsgemäßen Verfahren erreicht, dass die fertig hergestellten, mit der Formhaut fest verbundenen Formkörper eine einheitliche und verbesserte Qualität sowie Wertanmutung, insbesondere hinsichtlich ihrer sichtbaren Narbung oder Strukturierung, aufweisen. Auf die Verwendung eines Trennmittels kann vorteilhaft verzichtet werden.

Die Herstellung einer räumlich geformten und elastischen Haut als Negativmodell ist bereits aus der DE 39 13 157 C2 bekannt. Bei diesem Verfahren wird die elastische Haut durch einen Spritzroboters auf einem Arbeitsmodell hergestellt und anschließend von diesem abgezogen. Daraufhin wird die elastische Haut, welche auf ihrer Innenseite eine Narbung aufweist, umgestülpt, so dass die Narbung dann nach außen zeigt. Insbesondere sollen dadurch enge Radien und Hinterschnitte besser für einen Spritzroboter besser zugänglich sind, der eine Polyurethanlackschicht als so genanntes In-Mould-Coating und anschließend eine tragende Polyurethanformhaut auf die genarbte Seite der elastischen Haut aufsprüht. Nachteilig an diesem Verfahren ist, dass durch Zurückstülpen und Entnahme dieser zweischichtigen Formhaut aus der elastischen Haut zunächst nur eine Formhaut erhalten wird, die dann üblicherweise in anderen Werkzeugen mit einem Formkörper fest verbunden wird. Es hat sich außerdem gezeigt, dass beim Stülpen und Zurückstülpen der elastischen Haut Dehnungen und Stauchungen sowohl der elastischen Haut als auch der Formhaut auftreten, was sich insbesondere in kleinen Radien und Hinterschnitten negativ bemerkbar macht. Die Herstellung einer spannungsfreien Formhaut ist nach diesem bekannten Verfahren nicht möglich.

Gleiches gilt für ein aus der DE 41 29 777 A1 bekanntes Verfahren zum Herstellen einer räumlich geformten und gegebenenfalls genarbten Formhaut aus einem aushärtbaren, im Endzustand aber noch flexiblem Kunststoff, insbesondere aus Polyurethan, als Überzug für auszuschäumende folienkaschierte Innenausbauteile von Fahrzeugen, insbesondere von Instrumententafeln. Bei einem derartigen Verfahren wird ein flüssiger Kunststoff auf eine der Negativform der Formhaut entsprechende elastische Haut in einer gewünschten Lagenstärke aufgesprüht. Die elastische Haut wird beim Aufsprühen der Kunststoffschicht im Bereich von Hinterschnitten und/oder starken Vertiefungen zeitweilig nach außen gestülpt. Nach der Auftragung des Kunststoffes wird die elastische Haut vor dem Aushärten des Kunststoffes wieder in ihre Ausgangslage zurückgestülpt. Nach dem Aushärten des Kunststoffes wird dann die fertig hergestellte Formhaut zur weiteren Verwendung entnommen.

Das erfindungsgemäße Verfahren zur Herstellung eines mit einer genarbten oder strukturierten Formhaut fest verbundenen Formkörpers in nur einer Aufnahmeform, in die eine elastische Haut eingelegt ist, hat den besonderen Vorteil, dass die Oberfläche des Formkörpers bis zum letzten Verfahrenschritt durch die elastische Haut geschützt ist. So können Beschädigungen an der Oberfläche, wie sie beispielsweise beim Transport der Formhäute oder dem separaten Verschäumen der Formhäute vorkommen, sicher verhindert werden. Dies bedeutet vorteilhaft eine Sicherstellung gleich bleibender Qualität und weniger Ausschuss, so dass insgesamt die Kosten reduziert werden können.

Vorteilhaft ist auch, dass die zunächst hergestellte Formhaut ohne Wechsel der Aufnahmeform verschäumt werden kann. In herkömmlichen Nickel-Galvanoschalen, die üblicherweise zur Herstellung von Slush- und Sprühformhäuten eingesetzt werden, ist dieses nur mit Einschränkungen möglich. Nachteilig ist insbesondere, dass fehlerhafte Slush- oder Gießformhäute zu so genannten Durchschäumern führen können, wodurch die Galvanoschalen verunreinigt werden und relativ aufwendige Reinigungsarbeiten notwendig sind. Dies kann bei dem erfindungsgemäßen Verfahren nicht eintreten.

Das im Schritt b) des erfindungsgemäßen Verfahrens beschriebene Auftragen einer flüssigen Kunststoffschicht in vorgegebener Schichtdicke auf die genarbte oder strukturierte Innenseite der elastischen Haut kann durch bekannte Slush- oder Gießprozesse erfolgen. Als flüssige Kunststoffe sollen hier auch Kunststoffe im geschmolzenen Zustand verstanden werden.

Eine Weiterbildung der Erfindung sieht vor, dass das im Verfahrensschritt d) verwendete Werkzeugoberteil einen lösbaren und räumlich geformten Träger umfasst, durch den der Zwischenraum wenigstens teilweise anstelle des Werkzeugoberteils begrenzt wird, wobei die Ausmaße des Zwischenraums von den Konturen der Formhaut und wenigstens teilweise durch den am Werkzeugoberteil angeordneten Träger anstelle des Werkzeugoberteils vorgegeben werden, und dass im Verfahrensschritt e) der gesamten Verbund aus elastischer Haut, Formhaut und Formkörper mit eingebettetem Träger aus der Aufnahmeform des Werkzeugunterteils herausgenommen wird, wobei das Werkzeugoberteil entweder vor oder nach dem Herausnehmen des gesamten Verbundes von dem Träger gelöst und entfernt wird.

Als geeignete reaktive Schäumungsmittel werden solche Ausgangsstoffe verwendet werden, die vorzugsweise offenzellige Polyurethan-Schäume bilden.

Eine vorteilhafte Ausgestaltung der Erfindung sieht vor, dass der Schäumungsprozess unter Wärmeeinwirkung erfolgt, und dass das Werkzeugoberteil zu diesem Zweck über wenigstens einen im Werkzeugoberteil verlaufenden Heizkanal beheizt wird.

Erfindungsgemäß werden die Aufgaben bei einem Verfahren zur Herstellung eines mit einer genarbten oder strukturierten Formhaut fest verbundenen Formkörpers außerdem durch folgende Merkmale gemäß Anspruchs 5 gelöst:
a) Einlegen einer räumlich geformten und elastischen Haut, die auf ihrer Innenseite eine Narbung oder Strukturierung aufweist, in eine einseitig offene Aufnahmeform eines Werkzeugunterteils, derart, dass die elastische Haut mit ihrer Außenseite an der Innenwand der Aufnahmeform anliegt und durch diese Innenwand stabilisiert wird,
b) Auftragen einer flüssigen Kunststoffschicht in vorgegebener Schichtdicke auf die genarbte oder strukturierte Innenseite der elastischen Haut,
c) Aushärten der Kunststoffschicht, wobei sich die Formhaut bildet,
d) Verbinden eines als Träger ausgebildeten Formkörpers mit der Formhaut, derart, dass ein Primer und/oder ein Klebstoff auf die Innenseite der Formhaut aufgetragen werde und anschließend der Träger als lösbares Teil eines Werkzeugoberteils von dem Werkzeugoberteil auf die mit dem Primer und/oder Klebstoff versehene Formhaut gedrückt wird, wobei eine feste Verbindung zwischen Träger und Formhaut gebildet wird,
e) Herausnehmen des gesamten Verbundes aus elastischer Haut, Formhaut und Formkörper aus der Aufnahmeform des Werkzeugunterteils, wobei das Werkzeugoberteil entweder vor oder nach dem Herausnehmen des gesamten Verbundes von dem als Träger ausgebildeten Formkörper gelöst und entfernt wird, und
f) Abziehen der elastischen Haut von der mit dem Formkörper fest verbundenen Formhaut, wobei auf der Oberfläche der Formhaut nach dem Abziehen der elastischen Haut eine Narbung oder Strukturierung zurückbleibt.

Eine Weiterbildung der Erfindung sieht vor, dass das Verbinden des als Träger ausgebildeten Formkörpers mit der Formhaut nicht wie in den Verfahrensschritten c) und d) erfolgt, sondern derart, dass der Träger als ein lösbares Teil des Werkzeugoberteils von dem Werkzeugoberteil auf die noch nicht vollständig ausgehärtete Kunststoffschicht gedrückt wird, wobei erst nach dem vollständigen Aushärten der Kunststoffschicht eine feste Verbindung zwischen dem Träger und der Formhaut entsteht.

In einer vorteilhaften Ausgestaltung de Erfindung wird die die im Verfahrensschritt f) abgezogene elastische Haut direkt wieder im Verfahrensschritt a) verwendet.

Eine Weiterbildung sieht vor, dass das Auftragen der flüssigen Kunststoffschicht in vorgegebener Schichtdicke auf die genarbte oder strukturierte Innenseite der elastischen Haut dadurch erfolgt, dass der flüssige Kunststoff in einen Zwischenraum eingegossen oder eingespritzt wird, der durch die Innenseite der elastischen Haut und ein in die Aufnahmeform des Werkzeugunterteils eingefügtes, räumlich geformtes Werkzeugoberteil begrenzt wird, wobei die Ausmaße des Zwischenraums von den Konturen der elastischen Haut und des Werkzeugoberteils vorgegeben werden, und dass das Werkzeugoberteil nach dem wenigstens teilweisen Aushärten der Kunststoffschicht wieder aus der Aufnahmeform des Werkzeugunterteils entfernt wird.

Dadurch wird erreicht, dass die hergestellte Formhaut reproduzierbar Schichtdicken, insbesondere auch im Bereich von Hinterschnitten, aufweist. Die Formhäute können auf diese Weise spannungsfrei hergestellt werden, so dass die mit einer Formhaut fest verbundenen Formkörper einen einheitlichen Qualitätsstandard erfüllen.

Vorzugsweise erfolgt das Aushärten der Kunststoffschicht unter Wärmeeinwirkung, wobei das Werkzeugoberteil zu diesem Zweck über wenigstens einen im Werkzeugoberteil verlaufenden Heizkanal beheizt wird.

Dies ist besonders vorteilhaft, zumal eine Wärmeeinwirkung über das Werkzeugunterteil aufgrund der schlecht wärmeleitenden elastischen Haut beeinträchtigt ist.

Weiterhin ist vorgesehen, dass zur Bildung der Kunststoffschicht vernetzbare Polyurethane, vorzugsweise Polyurethan-Gießharze, flüssige und vernetzbare Massen, vorzugsweise Epoxidharze, oder nicht reaktive geschmolzene Massen, vorzugsweise thermoplastische Polyurethane (TPU), thermoplastische Polyolefine (TPO), thermoplastische Elastomere (TPE), Polyvinylchlorid (PVC) oder Mischungen aus diesen Massen, verwendet werden.

In einer Weiterbildung der Erfindung wird zur Bildung der Kunststoffschicht ein ein- oder mehrkomponentiges vernetzbares Polyurethansystem verwendet, das vorzugsweise auf aliphatischen oder besonders bevorzugt auf aromatischen Ausgangsstoffen basiert.

Gemäß einer zweckmäßigen Ausgestaltung der Erfindung wird nach Durchführung des Verfahrensschrittes a) eine dünne Lackschicht als so genanntes In-Mould-Coating auf die genarbte Innenseite der elastischen Haut aufgebracht und getrocknet bzw. gehärtet. Anschließend erfolgt der Verfahrensschritt b), wobei die flüssige Kunststoffschicht nicht mehr direkt auf die Innenseite der elastischen Haut, sondern auf die dünne Lackschicht aufgetragen wird.

Durch das In-Mould-Coating werden die Oberflächeneigenschaften der Formhaut, insbesondere hinsichtlich ihrer Alterungsbeständigkeit oder ihrer Oberflächen- bzw. Narbabbildung, verbessert.

In einer Weiterbildung werden hierbei verschiedene Bereiche der Innenseite der elastischen Haut mit verschiedenfarbigen Lacken beschichtet.

Erfindungsgemäß wird die oben genannte Aufgabe bei einer Vorrichtung zur Durchführung des erfindungsgemäßen Verfahrens dadurch gelöst, dass die räumlich geformte und elastische Haut, die auf ihrer Innenseite eine Narbung oder Strukturierung aufweist, eine flexible elastomere Polyurethan- oder Gummihaut, vorzugsweise aber eine flexible Silikonhaut ist.

Silikonhäute zeichnen sich durch eine besonders gute Druckund Wärmebeständigkeit aus. Insbesondere hat sich gezeigt, dass Silikonhäute bei mit Walzen durchgeführten Prägeprozessen teilweise sehr lange Standzeiten haben.

Insbesondere durch die Kombination von Silikonhäuten und In-Mould-Coatings sind vorteilhaft aber auch einzigartige Darstellungen prägnanter und hochwertiger Narbungen möglich, beispielsweise Veloursnarben, die nach dem Stand der Technik nicht oder nur sehr schwierig auf der Oberfläche dreidimensionaler Konstruktionen wie Instrumententafeln erzeugbar sind. Die Darstellung mehrfarbiger Teile mit einer größeren Narbvielfalt als sie herkömmliche Formhauterzeugungs-Verfahren bieten ist mit dem hier geschilderten Verfahren möglich.

Es ist vorgesehen, dass in der elastischen Haut verstärkende Elemente, insbesondere Gewebe, Kunststoff-, Textil- oder Glasfasern, angeordnet sind, wodurch die Formbeständigkeit erhöht wird.

Eine Weiterbildung der Erfindung sieht vor, dass die räumlich geformte und elastische Haut dadurch herstellbar ist, dass ein flüssiges Silikonpräpolymer nach Auftragen auf ein genarbtes oder strukturiertes Positivmodell durch eine Additions- und/oder Kondensationsreaktion vernetzt wird, und anschließend vom Positivmodell abgezogen wird, wobei die elastische Silikonhaut das räumlich geformte Negativabbild der in den Verfahrenschritten b) und c) herzustellenden Formhaut darstellt und auf ihrer Innenseite eine entsprechende Narbung oder Strukturierung aufweist.

Eine derartig hergestellte Silikonhaut enthält genaueste Informationen über die Kontur, die Narbung oder Strukturierung und gegebenenfalls über den Zweiglanz des herzustellenden mit einer Formhaut fest verbundenen Formkörpers. Dieses so genannte Abgussverfahren ist kostengünstig und schnell durchzuführen. Unbrauchbar gewordene Silikonhäute können daher schnell ausgetauscht werden.

Vorzugsweise ist die räumlich geformte und elastische Silikonhaut dadurch herstellbar, dass von der Außenseite der vom Positivmodell abgezogenen Silikonhaut derart viel Silikon entfernt wird, dass eine vorgegebene Schichtdicke der Silikonhaut erhalten wird.

Alternativ ist die räumlich geformte und elastische Silikonhaut dadurch herstellbar, dass das flüssige Silikonpräpolymer in einen Zwischenraum eines geschlossenen Werkzeugs eingebracht wird, der durch ein das Positivmodell wiedergebendes Werkzeugoberteil und ein über das Positivmodell bringbares, räumlich geformtes Werkzeugunterteil begrenzt wird, wobei die Ausmaße des Zwischenraums von den Konturen des Werkzeugunterteils und Werkzeugoberteils vorgegeben werden, und dass nach dem Einbringen des Silikonpräpolymers in den Zwischenraum die Vernetzung erfolgt.

Derartig hergestellte Silikonhäute besitzen eine sehr hohe Wiedergabegenauigkeit und lassen sich insbesondere reproduzierbar in großer Stückzahl darstellen. Hierbei ist entscheidend, dass die Silikonhäute reproduzierbar in gleichen Schichtdicken hergestellt werden können, da diese nämlich direkte Auswirkungen auf eine gleich bleibende Qualität der herzustellenden mit einer genarbten oder strukturierten Formhaut fest verbundenen Formkörper haben.

In einer vorteilhaften Ausgestaltung der Erfindung weist die elastische Haut eine Schichtdicke zwischen 0,8 und 10 mm, vorzugsweise zwischen 1 und 6 mm, auf.

Dadurch wird erreicht, dass sich die möglicherweise auf der Innenwand der Aufnahmeform des Werkzeugunterteils vorhandenen Kanten trotz des beispielsweise beim Hinterschäumen der Formhaut auf die Innenwand wirkenden Drucks nicht auf der mit der Narbung oder Strukturierung versehenen Oberfläche der Formhaut abzeichnen.

Weiterhin ist vorgesehen, dass das in einem der Verfahren nach den Ansprüchen 1 bis 13 verwendete Werkzeugunterteil mehrteilig aufgebaut ist und/oder bewegliche Elemente, insbesondere Schieber, Klappen oder Auswerfer, umfasst.

Dadurch lässt sich das Werkzeugunterteil an verschiedene Konturen der verwendeten elastischen Häute anpassen. Es müssen also nicht zahlreiche Werkzeuge vorgehalten werden. Dies spart erhebliche Werkzeugkosten. Außerdem bestehen zahlreiche Gestaltungsmöglichkeiten, da sich erfindungsgemäß keine Kanten der beweglichen Elemente auf der Formhaut des fertig hergestellten Formkörpers abzeichnen. So ist die Herstellung auch geometrisch anspruchvoller Formkörper mit komplizierten Hinterschnitten möglich.

Dadurch wird auch eine wesentlich einfachere Entformung eines hergestellten Formkörpers ermöglicht. Dies war bisher bei anspruchsvollen, geometrischen Konturen, insbesondere im Bereich von Hinterschnitten, nicht ohne eine Sichtbarkeit von beispielsweise Trenn- und Schieberlinien möglich. Bei dem erfindungsgemäßen Verfahren sind somit mehr Gestaltungsmöglichkeiten durch einen Designer gegeben. Hier unterscheidet sich das erfindungsgemäße Verfahren erheblich von herkömmlichen Verfahren, die zur Herstellung eines mit einer genarbten oder strukturierten Formhaut fest verbundenen Formkörpers auch nur eine Aufnahmeform eines Werkzeugunterteils verwenden.

Außerdem sieht eine Weiterbildung vor, dass die in einem der Verfahren gemäß den Ansprüchen 1 bis 13 verwendeten Werkzeugoberteile mehrteilig aufgebaut sind und/oder bewegliche Elemente, insbesondere Schieber, Klappen oder Auswerfer, umfassen.

Dadurch können mit dem Werkzeugoberteil gewünschte Konturen und Ausmaße der zuvor genannten Zwischenräume, insbesondere im Bereich von Hinterschnitten, vorgeben. Auch hier bestehen zahlreiche Gestaltungsmöglichkeiten.

Die in einem der Verfahren gemäß den Ansprüchen 1 bis 13 verwendeten Werkzeugunter- und/oder -oberteile umfassen in einer vorteilhaften Ausgestaltung der Erfindung Heizungskanäle, durch die das Werkzeugunter- und/oder -oberteil beheizbar ist.

Durch das Beheizen der Werkzeugteile kann das Aushärten der in die Aufnahmeform eingebrachten flüssigen Kunststoffe beschleunigt werden. Hierbei hat sich insbesondere die Beheizbarkeit des Werkzeugoberteils erwiesen, da die in der Aufnahmeform des Werkzeugunterteils eingelegte elastische Haut bekanntermaßen nur schlecht die Wärme leitet.

Die oben genannte Aufgabe wird bei einem mit einer genarbten oder strukturierten und gegebenenfalls lackierten Formhaut fest verbundenen Formkörper dadurch gelöst, dass dieser durch ein Verfahren nach einem der Ansprüche 1 bis 13 herstellbar ist.

Ein derartiger Formkörper erfüllt vorteilhaft einen einheitlichen Qualitätsstandard, da er sich reproduzierbar herstellen lässt. Außerdem zeichnet er sich durch eine verbesserte genarbte oder strukturierte Oberfläche aus, die so mit herkömmlichen Verfahren nicht herstellbar war.

Vorzugsweise besitzt die Formhaut eines mit dieser fest verbundenen Formkörpers, der durch ein Verfahren nach Anspruch 8 herstellbar ist, eine Schichtdicke zwischen 0,3 und 5 mm, vorzugsweise aber zwischen 0,4 und 2 mm.

Die Erfindung betrifft außerdem die Verwendung eines mit einer genarbten Formhaut fest verbundenen Formkörpers nach Anspruch 23 oder 24 als Bauteil innerhalb eines Fahrzeuginnenraums, insbesondere als Instrumententafel, Türverkleidung oder Handschuhfachabdeckung.

Weiterbildungen und vorteilhafte Ausgestaltungen der Erfindung ergeben sich aus den Unteransprüchen sowie aus dem Ausführungsbeispiel.

Nachfolgend wird die Erfindung anhand eines Ausführungsbeispiels erläutert, das in der Zeichnung dargestellt ist. In dieser zeigen:
- Fig. 1: eine schematische Querschnittsdarstellung eines geschlossenen Werkzeugs zur Herstellung der in dem erfindungsgemäßen Verfahren und der erfindungsgemäßen Vorrichtung verwendeten räumlich geformten und elastischen Silikonhaut,
- Fig. 2: eine schematische Querschnittsdarstellung des geschlossenen Werkzeugs wie in Fig. 1, jedoch nach Einbringen einer Silikonmasse in den vorgegebenen Zwischenraum,
- Fig. 3: eine schematische Querschnittsdarstellung des Positivmodells mit räumlich geformter und elastischer Silikonhaut nach Herausnehmen aus dem Werkzeugunterteil,
- Fig. 4: eine schematische Querschnittsdarstellung der vom Positivmodell abgezogenen räumlich geformten und elastischen Silikonhaut,
- Fig. 5: eine schematische Querschnittsdarstellung der Aufnahmeform eines Werkzeugunterteils, in welche die elastische Silikonhaut eingelegt ist,
- Fig. 6: eine schematische Querschnittsdarstellung der Aufnahmeform des Werkzeugunterteils mit eingelegter elastischer Silikonhaut, auf deren Innenseite eine dünne Lackschicht aufgetragen ist,
- Fig. 7: eine schematische Querschnittsdarstellung der Aufnahmeform des Werkzeugunterteils mit eingelegter und lackierter Silikonhaut, und eines in die Aufnahmeform des Werkzeugunterteils eingefügtes, räumlich geformtes Werkzeugoberteil,
- Fig. 8: eine schematische Querschnittsdarstellung des Werkzeugs wie in Fig. 1, jedoch nach Einbringen einer Kunststoffschicht in den Zwischenraum,
- Fig. 9: eine schematische Querschnittsdarstellung der Aufnahmeform des Werkzeugunterteils mit eingelegter Silikonhaut, dünner Lackschicht und der Polyurethanformhaut nach Herausnehmen des Werkzeugoberteils,
- Fig. 10: eine schematische Querschnittsdarstellung der Aufnahmeform des Werkzeugunterteils mit eingelegter Silikonhaut, dünner Lackschicht und Formhaut und eines in die Aufnahmeform eingefügten Werkzeugoberteils mit Träger,
- Fig. 11: eine schematische Querschnittsdarstellung des Werkzeugs wie in Fig. 10, jedoch nach Einbringen eines selbst aufschäumenden Polyurethansystems,
- Fig. 12: eine schematische Querschnittsdarstellung des Verbundes aus Silikonhaut, dünner Lackschicht, Polyurethanformhaut, Polyurethanschaumschicht und Träger nach Entfernen des Werkzeugoberteils und der Aufnahmeform des Werkzeugunterteils, und
- Fig. 13: eine schematische Darstellung des fertig hergestellten Verbundes aus einer mit einer Lackschicht versehenen genarbten Polyurethanhaut und einem mit dieser fest verbundenen Formkörper aus Polyurethanschaumschicht und Träger nach Entfernen der Silikonhaut.

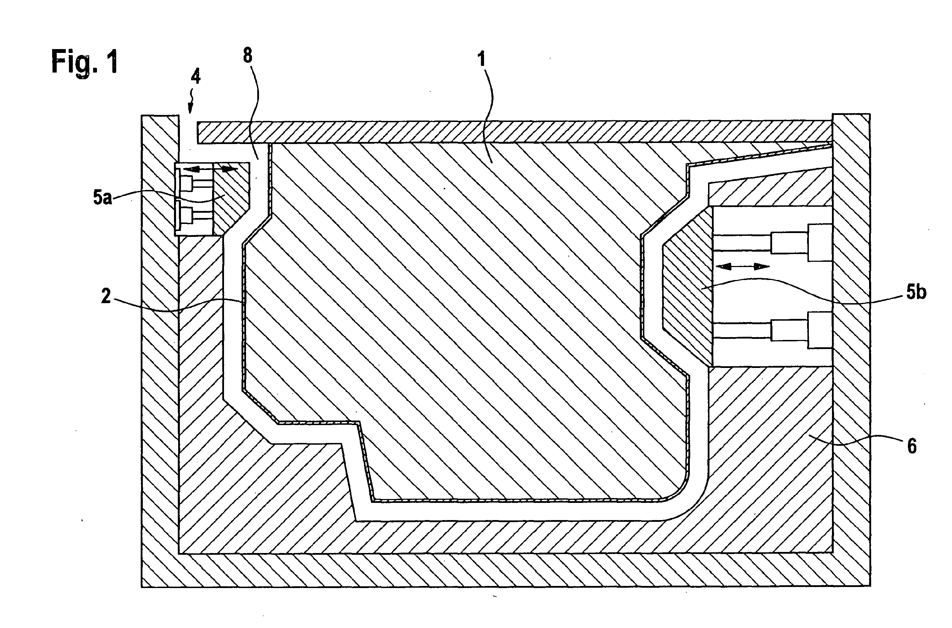

Gleiche in den Fig. 1 bis 13 verwendete Bezugszeichen kennzeichnen jeweils gleiche Teile.

Das in Fig. 1 schematisch dargestellte geschlossene Werkzeug zur Herstellung der in dem erfindungsgemäßen Verfahren und der erfindungsgemäßen Vorrichtung verwendeten räumlich geformten und elastischen Silikonhaut umfasst ein Werkzeugoberteil, welches ein Positivmodell 1 mit genarbter oder strukturierter Oberfläche 2 bildet, und ein räumlich geformtes Werkzeugunterteil 6, in welches das Positivmodell 2 eingebracht ist. Hierbei bildet sich ein Zwischenraum 8 aus, dessen Ausmaße von den Konturen des als Positivmodell 1 ausgebildeten Werkzeugoberteils und des Werkzeugunterteils 6 vorgegeben wird. Die Konturen werden in Abhängigkeit des herzustellenden, mit einer genarbten oder strukturierten Formhaut fest verbundenen Formkörpers gewählt. Das Werkzeugunterteil 6 umfasst außerdem bewegliche Elemente 5a und 5b, die eine Veränderung der Kontur des Werkzeugunterteils 6 ermöglichen. Im vorliegenden Fall werden die beweglichen Elemente 5a und 5b nach Einbringen des Positivmodells 1 in das Werkzeugunterteil 6 in Richtung Positivmodell 1 verfahren, so dass ein gleichmäßiger Zwischenraum 8 zwischen Positivmodell 1 und Werkzeugunterteil 6 entsteht. Dies ermöglicht die Herstellung von gleichmäßig dicken und reproduzierbaren elastischen Silikonhäuten. Die beweglichen Elemente 5a und 5b sind zweckmäßig, da sie insbesondere bei vorhandenen Hinterschnitten ein Herausnehmen des Positivmodells 1 aus dem Werkzeugunterteil 6 zulassen, ohne dass die Silikonhaut beschädigt wird. Hierzu werden die beweglichen Elemente 5a und 5b einfach in ihre Ausgangsposition zurück verfahren.

Eine am geschlossenen Werkzeug angeordnete Öffnung 4 ermöglicht das Einbringen der zur Herstellung der elastischen Silikonhaut erforderlichen flüssigen Silikonmasse in den Zwischenraum 8. Die eingebrachte Silikonmasse bildet nach dem Aushärten die elastische Silikonhaut und erzeugt ein ursprungstreues negatives Abformungsbild des Positivmodells 1.

Die Herstellung der Silikonhaut kann in mehreren Schichten erfolgen, wobei zweckmäßigerweise auch verstärkende Elemente, insbesondere Gewebe oder Fasern, mit eingebracht werden können.

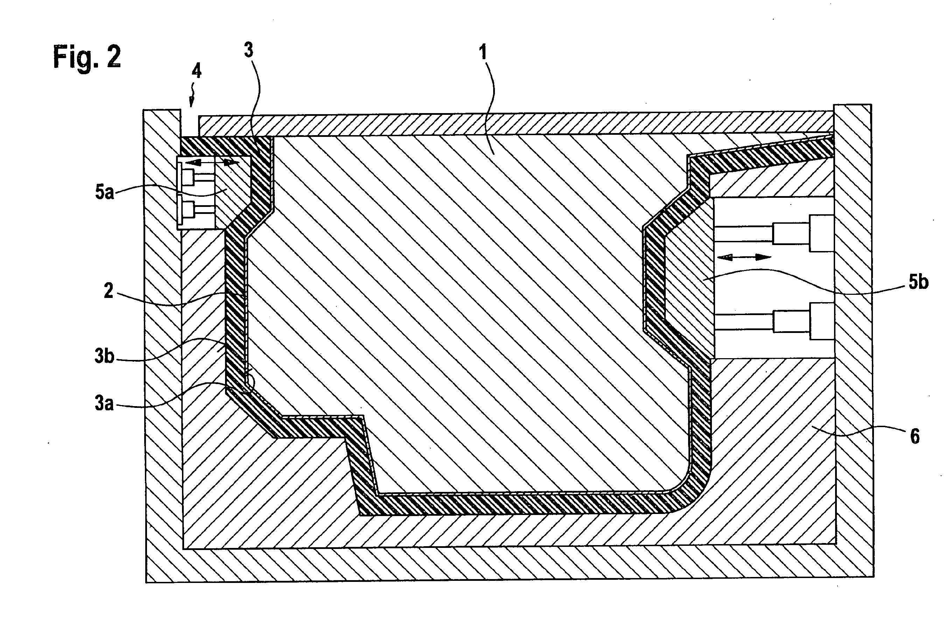

In Fig. 2 ist das gleiche geschlossene Werkzeug wie in Fig. 1 dargestellt, jedoch ist der in Fig. 1 dargestellte leere Zwischenraum 8 in Fig. 2 mit einer Silikonmasse versehen, die durch die Öffnung 4 in den Zwischenraum 8 eingefüllt wurde. In Abhängigkeit der Geometrie des Werkzeugs sind hierzu erforderliche, vorliegend aber nicht dargestellte Einfüllstutzen oder Entlüftungsöffnungen am Werkzeug vorgesehen. Das Einfüllen der Silikonmasse in den Zwischenraum kann auch unter Druck erfolgen.

Das Aushärten der Silikonmasse zu einer räumlich geformten und elastischen Silikonhaut 3 kann bei Raumtemperatur erfolgen. Zweckmäßig ist aber das Aushärten der Silikonmasse das Einbringen zusätzlicher Wärme zu beschleunigen. Hierzu ist das Werkzeugunterteil 6 vorzugsweise über hier nicht dargestellte, im Werkzeugunterteil 6 verlaufende Heizkanäle beheizbar.

Die durch das Aushärten der Silikonmasse erhaltene Silikonhaut 3 weist auf ihrer Außenseite 3b, also auf ihrer dem Werkzeugunterteil zugewandten Seite, eine im Wesentlichen glatte Oberfläche auf. Die Innenseite 3a der Silikonhaut 3, also die dem Positivmodell 1 zugewandte Seite, weist eine genarbte Oberfläche auf. Es handelt sich hierbei um ursprungstreues negatives Abformungsbild des Positivmodells 1.

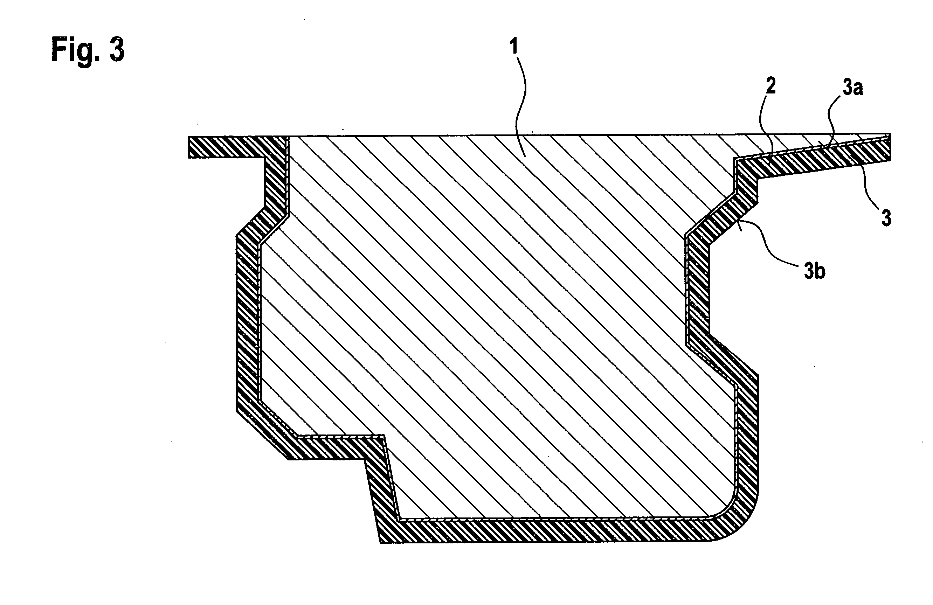

In Fig. 3 ist das Positivmodell 1 mit räumlich geformter und elastischer Silikonhaut 3 nach Herausnehmen aus dem in den Fig. 1 und 2 gezeigten Werkzeugunterteil 6 dargestellt. Die elastische Silikonhaut 3 wird nun dadurch erhalten, dass sie einfach von dem Positivmodell 1 abgezogen wird. Das Positivmodell 1 steht dann wieder für die Herstellung weiterer elastischer Silikonhäute 3 gleicher Art Verfügung. Es ist aber auch möglich, das Muttermodell mit einer neuen Oberflächennarbung oder -strukturierung zu versehen, ohne dass die Form geändert werden muss. Somit können auf einfache Weise Silikonhäute 3 gleicher Form, aber mit unterschiedlich genarbter oder strukturierter Innenseite 3a hergestellt werden. Dies ist besonders vorteilhaft, da eine Reduzierung des Handhabungsaufwands und der damit verbundenen Werkzeugkosten erreicht.

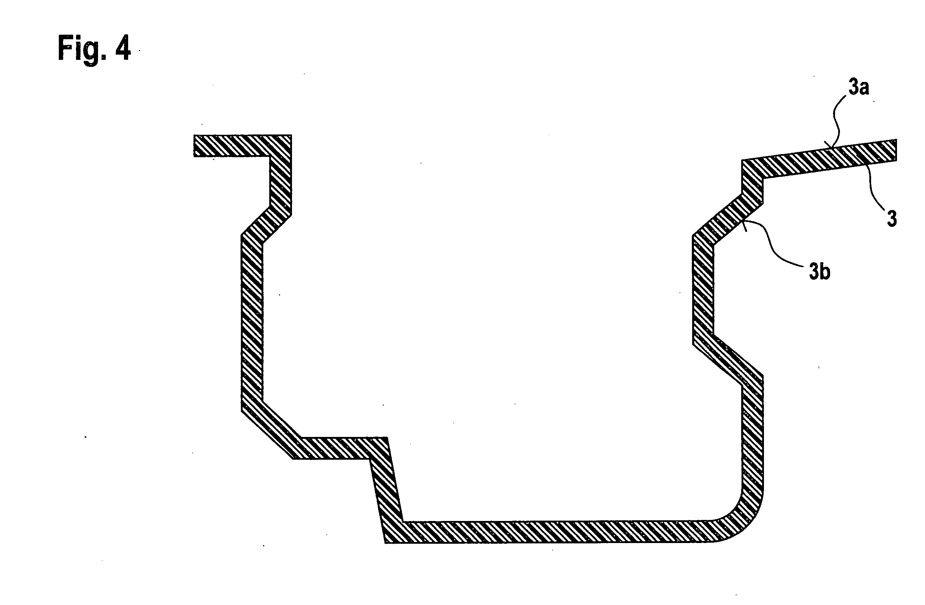

In Fig. 4 ist die vom Positivmodell 1 abgezogene, räumlich geformte und elastische Silikonhaut 3 dargestellt, die auf ihrer Innenseite 3a eine Narbung aufweist und auf ihrer Außenseite 3b glatt ausgebildet ist.

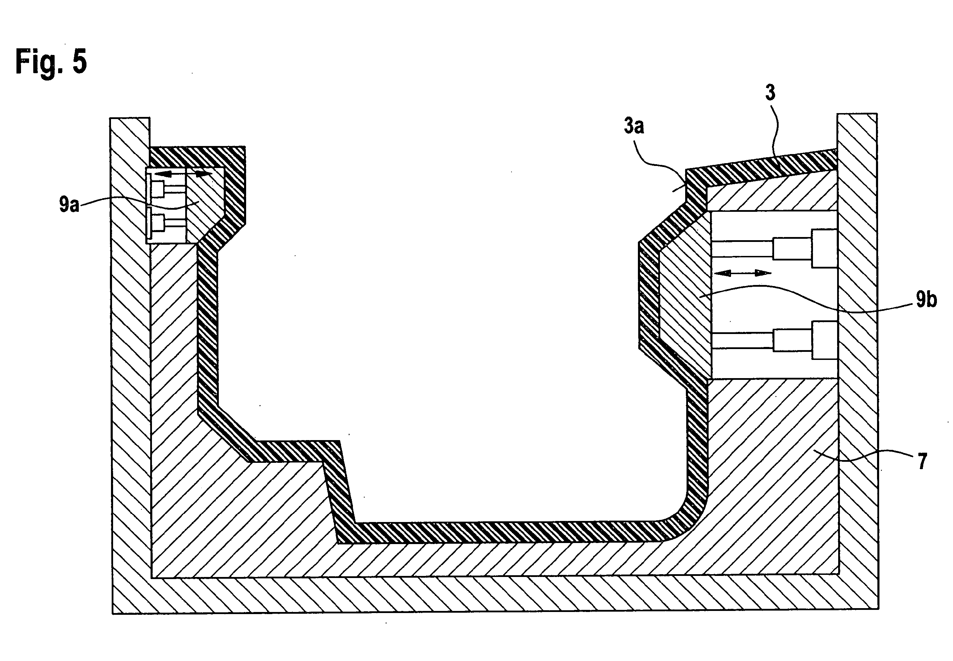

In Fig. 5 ist eine einseitig offene Aufnahmeform 7 eines Werkzeugunterteils dargestellt, in welche die räumlich geformte und elastische Silikonhaut 3 eingelegt ist. Die elastische Silikonhaut 3 ist hierbei mit ihrer glatten Außenseite 3b an der Innenwand der Aufnahmeform 7 angelegt und wird durch die Innenwand stabilisiert. Eine Stabilisierung könnte beispielsweise dadurch erfolgen, dass hier nicht dargestellte Vakuumeinrichtungen in der Innenwand vorgesehen sind, welche die Silikonhaut an die Innenwand saugen und dort stabilisieren, wobei das Vakuum jederzeit ein- und ausgeschaltet werden kann.

Vorliegend weist die Aufnahmeform 7 des Werkzeugunterteils bewegliche Elemente 9a und 9b in hinterschnittenen Bereichen der Silikonhaut 3 auf. Dadurch wird erreicht, dass die Silikonhaut 3 in der vorliegend dargestellten Anordnung hinreichend stabilisiert wird, aber auch in späteren Verfahrenschritten sehr einfach aus der Aufnahmeform 7 herausgenommen werden kann, ohne dass eine Beschädigung der Silikonhaut 3 eintritt. Dazu werden die beweglichen Elemente 9a und 9b einfach von der Silikonhaut 3 weg bewegt.

Die Anordnung der beweglichen Elemente ist in Abhängigkeit der Kontur der verwendeten Silikonhaut 3 frei wählbar, da die Qualität der herzustellenden Formhaut und des mit dieser Formhaut fest verbundenen Formkörpers hierdurch nicht beeinträchtigt wird.

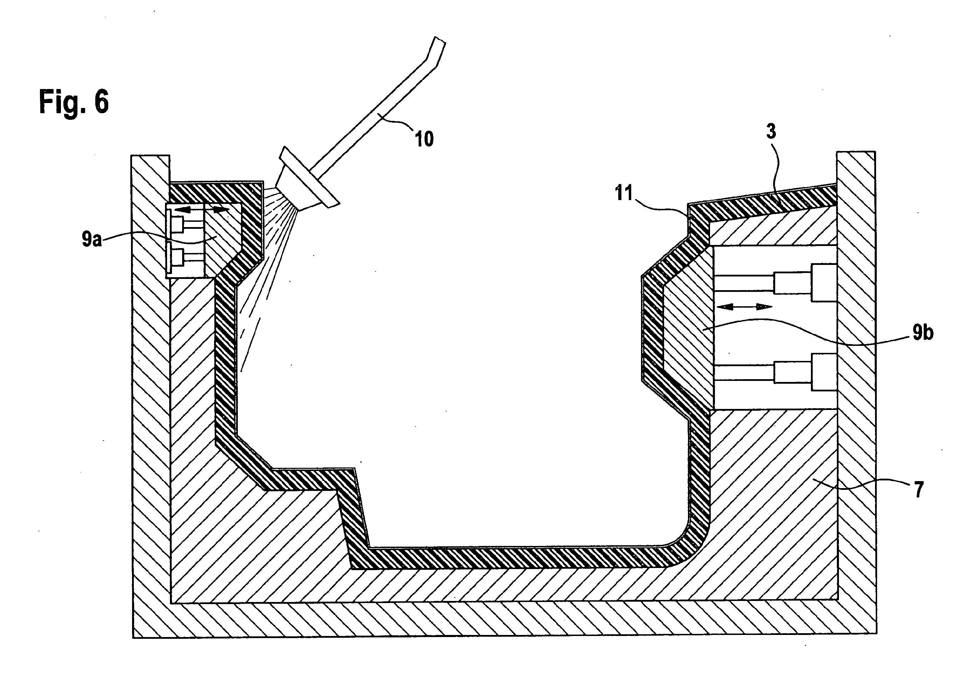

In Fig. 6 ist die Aufnahmeform 7 des Werkzeugunterteils mit eingelegter elastischer Silikonhaut 3 wie in Fig. 5 dargestellt. Auf die genarbte Innenseite 3a der Silikonhaut 3 ist eine dünne Lackschicht 11 aufgetragen. Dies erfolgt üblicherweise durch Aufsprühen mittels einer in Fig. 6 schematisch dargestellten Sprühvorrichtung 10. Dieses Verfahren wird auch als In-Mould-Coating bezeichnet.

Geeignete Lacksysteme sind entweder in lösungsmittelfreier oder lösungsmittelhaltiger Form bekannt. Das Trocknen bzw. Aushärten des Lackfilms 11 kann bei Raumtemperatur erfolgen, zweckmäßigerweise wird jedoch zur Beschleunigung Energie eingebracht, insbesondere durch hier nicht dargestellte über erwärmte Luft oder durch Infrarotstrahler.

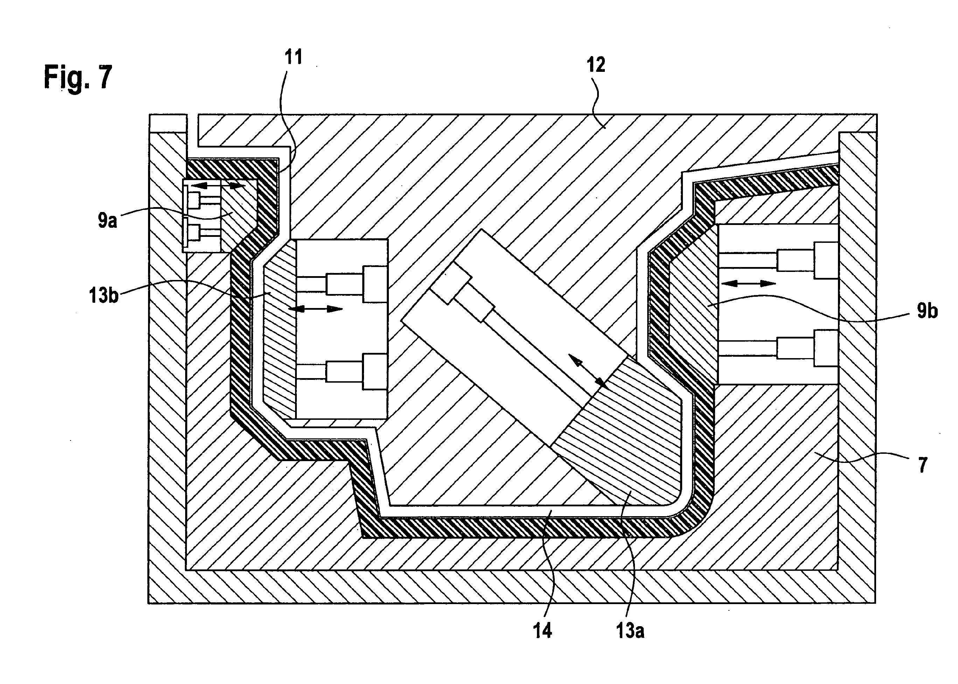

In Fig. 7 ist eine schematische Querschnittsdarstellung der Aufnahmeform 7 des Werkzeugunterteils mit eingelegter und mit einer Lackschicht 11 versehener Silikonhaut 3, und eines in die Aufnahmeform 7 des Werkzeugunterteils eingefügtes, räumlich geformtes Werkzeugoberteil 12 dargestellt.

Das im erfindungsgemäßen Verfahren vorgesehene Auftragen der flüssigen Kunststoffschicht in vorgegebener Schichtdicke auf die genarbte oder strukturierte lackierte Innenseite 3a der elastischen Haut 3 erfolgt dadurch, dass der flüssige Kunststoff in einen Zwischenraum 14 eingegossen oder eingespritzt wird. Dieser Zwischenraum 14 wird einerseits durch die lackierte Innenseite 3a der elastischen Haut 3 und andererseits durch ein in die Aufnahmeform 7 des Werkzeugunterteils eingefügtes, räumlich geformtes Werkzeugoberteil 12 begrenzt, wobei die Ausmaße des Zwischenraums 14 von den Konturen der elastischen Haut 3 und des Werkzeugoberteils 12 vorgegeben werden. Insofern bildet die lackierte Silikonhaut 3 gewissermaßen eine Matrize und das eingefügte Werkzeugoberteil 12 gewissermaßen eine Patrize. Der Zwischenraum 14 bildet demgemäß die Form für die aufzutragende Kunststoffschicht, wobei die Kunststoffschicht nach dem Aushärten die Formhaut bildet.

Wie in Fig. 7 dargestellt, umfasst das Werkzeugoberteil 12 bewegliche Elemente 13a und 13b. Diese Elemente 13a und 13b ermöglichen ein Einfügen und Herausnehmen des Werkzeugoberteils 12 in die und aus der Aufnahmeform 7 des Werkzeugunterteils. Beim Einfügen des Werkzeugoberteils 12 sind die beweglichen Elemente zunächst im Werkzeugoberteil 12 eingefahren. Erst wenn das Werkzeugoberteil 12 eine vorgegebene Position innerhalb der Aufnahmeform 7 des Werkzeugunterteils erreicht hat, werden die beweglichen Elemente 13a und 13b ausgefahren Das Ausfahren erfolgt üblicherweise in hinterschnittenen Bereichen der Silikonhaut 3, so dass insgesamt ein Zwischenraum 14 mit gleichmäßiger Höhe entsteht. Zum Herausnehmen des Werkzeugoberteils 12 werden die beweglichen Elemente 13 und 13b wieder in ihre ursprüngliche Position zurückgefahren. Dadurch werden Beschädigungen insbesondere an der hergestellten Formhaut verhindert.

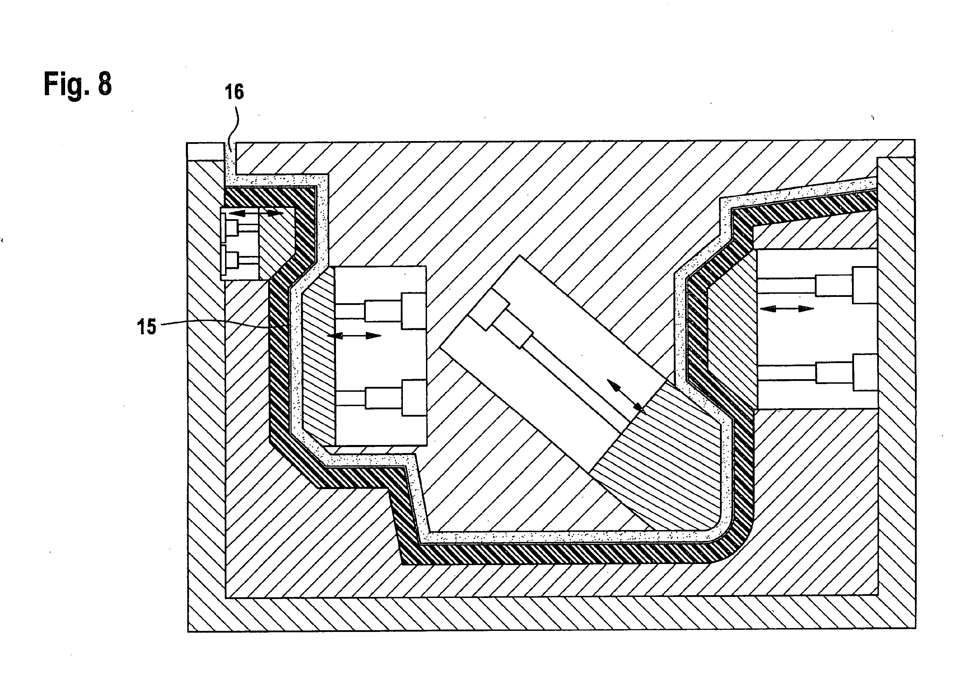

In Fig. 8 ist das gleiche Werkzeug wie in Fig. 1 dargestellt, jedoch nachdem eine Kunststoffschicht in den Zwischenraum 14 eingebracht wurde. Das Einbringen der Kunststoffschicht erfolgt über einen mit dem Zwischenraum 14 in Kontakt stehenden Einfüllstutzen 16. Vorzugsweise wird hierbei eine flüssige reaktive Polyurethanmasse in den Zwischenraum 14 eingefüllt. Die Befüllung erfolgt zweckmäßigerweise unter Druck, um eine schnelle und gleichmäßige Verteilung der Polyurethanmasse zu erreichen. Dies kann in Abhängigkeit von der Ausgestaltung des Werkzeugs natürlich auch über mehrere hier nicht dargestellte Einfüllstutzen 16 erfolgen. Außerdem ist wenigstens eine hier ebenfalls nicht dargestellte Entlüftungsöffnung vorgesehen, die mit dem Zwischenraum in Kontakt steht.

Zweckmäßigerweise verwendet man zur Herstellung der Kunststoffschicht schnell reagierende Systeme um eine schnelle Herstellung der Formhaut zu erreichen. Als besonders vorteilhaft hat sich ein auf aromatische Ausgangsstoffe basierendes Polyurethan-Reaktionssystem erwiesen, wobei es aber zweckmäßig ist, wenn die Lackschicht 11 in diesem Fall auf einem aliphatischen Polyurethanen basierenden Lacksystem beruht. Hierdurch wird vorteilhaft die Alterungsbeständigkeit der Formhaut gewährleistet.

Das Aushärten der in den Zwischenraum 14 eingefüllten Kunststoffschicht erfolgt in bevorzugter Ausgestaltung unter Wärmeeinwirkung. Zu diesem Zweck ist vorgesehen, dass das Werkzeugoberteil 12 beheizbar ist, wozu insbesondere hier nicht dargestellte Heizkanäle in dem Werkzeugoberteil 12 angeordnet sein können.

Die ausgehärtete Polyurethanmasse bildet dann die Formhaut 15.

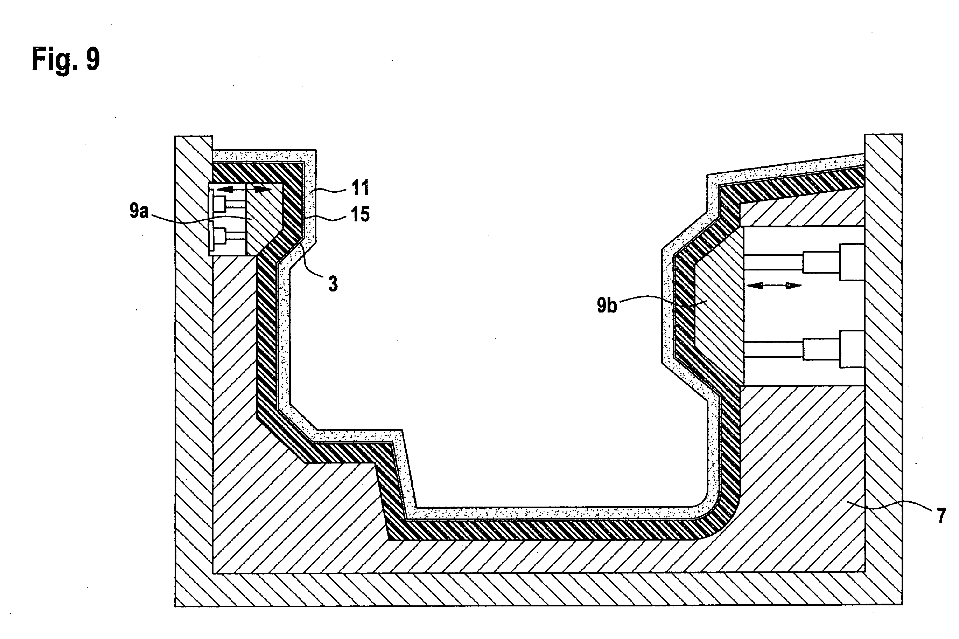

In Fig. 9 ist die Aufnahmeform 7 des Werkzeugunterteils mit eingelegter Silikonhaut 3, dünner Lackschicht 11 und der Polyurethanformhaut 15 nach Herausnehmen des Werkzeugoberteils 12 dargestellt. Es besteht die Möglichkeit, die mit der dünnen Lackschicht 11 fest verbundene Polyurethanformhaut 15 aus der Aufnahmeform 7 des Werkzeugunterteils zu entnehmen, wobei die Silikonhaut 3 entweder mit entnommen wird oder in der Aufnahmeform 7 des Werkzeugunterteils verbleibt.

Nach der leichten Trennung des Verbundes aus Formhaut 15 und Lackschicht 11 von der Silikonhaut 3 weist die mit der Lachschicht 11 versehene Seite der Formhaut 15 die gleiche Narbung oder Strukturierung auf wie das zur Herstellung der Silikonhaut 3 verwendete Positivmodell 1. Die abgetrennte Silikonhaut 3 kann erneut zur Herstellung weiterer Formhäute 15 verwendet werden.

Erfindungsgemäß wird aber zunächst die Silikonhaut 3 mit dem Verbund aus dünner Lackschicht 11 und Formhaut 15 in der Aufnahmeform 7 des Werkzeugunterteils belassen, um diese in vorteilhafter Weise im gleichen Werkzeug zu verschäumen und mit einem Träger zu versehen. Dieses erfindungsgemäße als One-Step-Process bezeichnete Verfahren ermöglichte die komplette Herstellung von Bauteilen aus Formhaut, Schaum und Träger in einem Werkzeug, wobei die Formhaut auch wie oben beschrieben lackiert werden kann.

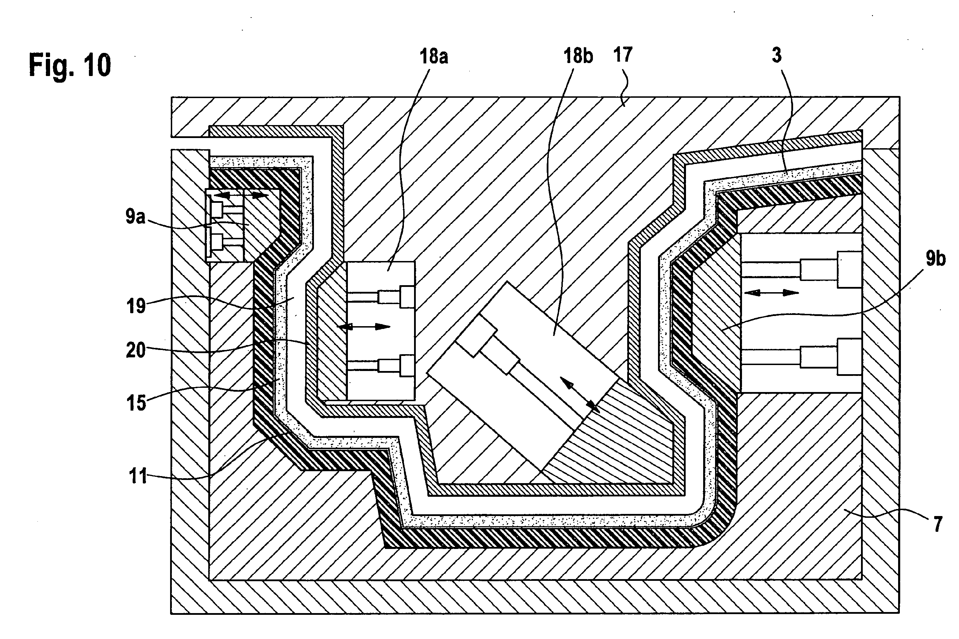

In Fig. 10 ist die Aufnahmeform 7 des Werkzeugunterteils mit eingelegter Silikonhaut 3, dünner Lackschicht 11 und Formhaut 15 und einem in die Aufnahmeform eingefügtes Werkzeugoberteil 17 mit einem Träger 20 dargestellt.

Die in Fig. 10 dargestellte Anordnung dient einerseits zum Hinterschäumen der Formhaut 15 zur Bildung des Formkörpers und anderseits zum Herstellen einer festen Verbindung zwischen dem lösbar am Werkzeugoberteil 17 befestigten Träger 20 und dem herzustellenden Schaum, die zusammen den Formkörper bilden, und zwischen dem Formkörper und der Formhaut 15.

In diesem Schritt des erfindungsgemäßen Verfahrens werden geeignete reaktive Schäumungsmittel in den Zwischenraum 19 eingebracht, der durch die Innenseite der Formhaut 15 und den am Werkzeugoberteil 17 lösbar befestigten und räumlich geformten Träger 20 begrenzt wird. Die Ausmaße des Zwischenraums 19 werden von den Konturen der Formhaut 15 und des Trägers 20 vorgegeben.

Der Träger 20 kann beispielsweise über ein Vakuum lösbar am Werkzeugoberteil 17 befestigt sein, wobei das Werkzeugoberteil 17 wenigstens eine hier nicht dargestellte Vakuumvorrichtung umfasst.

Das Werkzeugoberteil 17 umfasst außerdem bewegliche Elemente 18a und 18b, die ein einfaches und beschädigungsloses Entfernen des Werkzeugoberteils 17 aus der Aufnahmeform 7 ermöglichen, wenn die Elemente 18a und 18b in eine in das Werkzeugoberteil 17 eingefahrene Position gebracht werden.

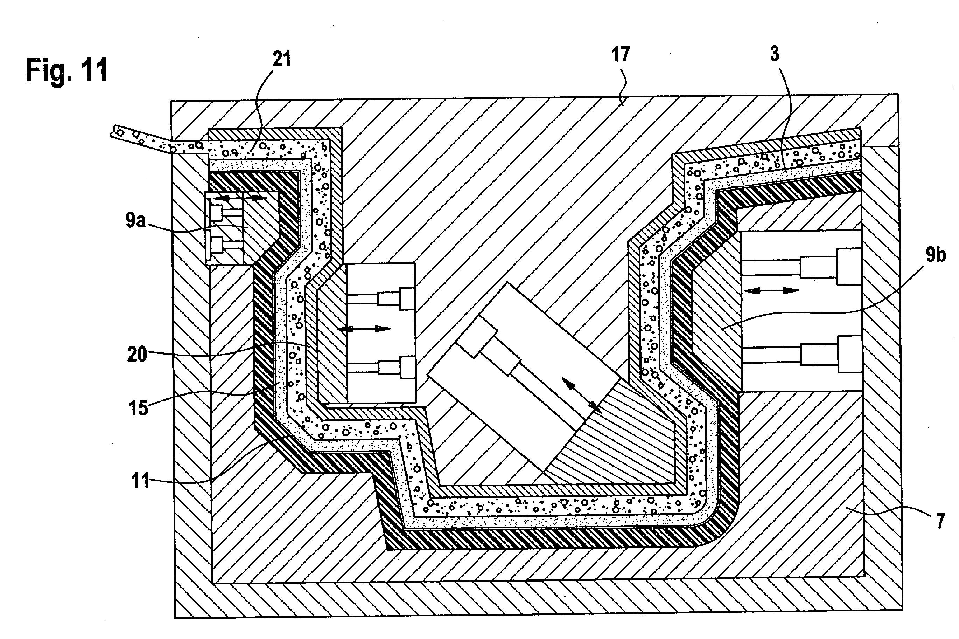

In Fig. 11 ist die gleiche Anordnung wie in Fig. 10 dargestellt, jedoch nach Einbringen eines selbst aufschäumenden Polyurethansystems, das zu einem festen Schaum 21 aushärtet, wobei ein fester Verbund aus der mit der Lackschicht 11 versehenen Formhaut 15, der Schaumschicht 21 und dem Träger 20 gebildet wird.

Das Einbringen des aufschäumenden Systems wird entweder mit Druck über eine mit dem Zwischenraum 19 in Kontakt stehende Öffnung in den Zwischenraum 19 eingefüllt oder direkt in das geöffnete Werkzeug gegossen, wobei das Werkzeugoberteil 17 noch vor dem Aufschäumen direkt in die in Fig. 11 dargestellte Position gebracht werden muss.

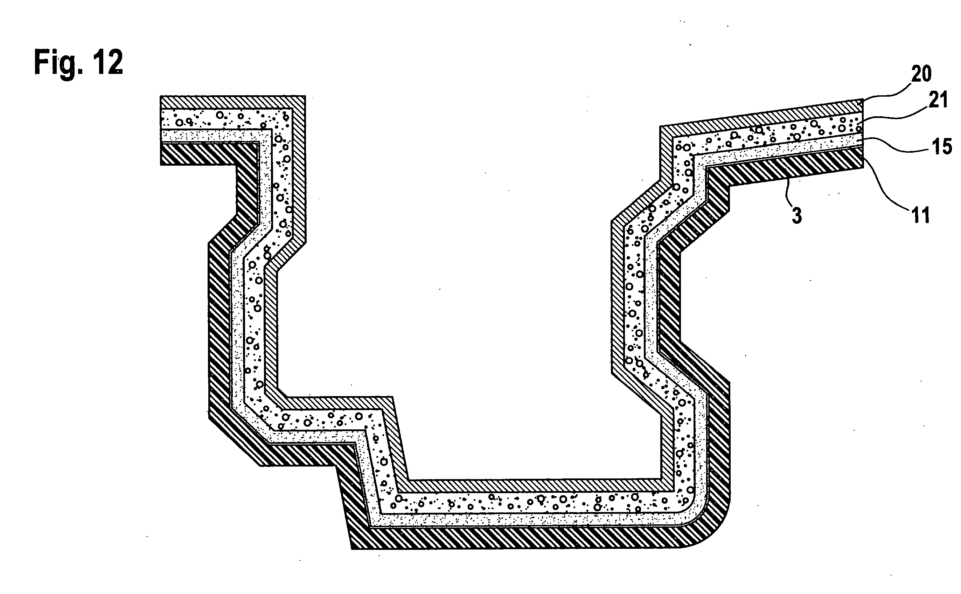

In Fig. 12 ist die aus der Aufnahmeform 7 herausgenommene Anordnung aus Silikonhaut 3, dünner Lackschicht 11, Polyurethanformhaut 15, Polyurethanschaumschicht 21 und Träger 20 nach Entfernen des Werkzeugoberteils 17 dargestellt. Die vorteilhaft dehäsiv wirkende Silikonhaut 3 kann leicht vom hergestellten Verbund aus Träger 20, Polyurethanschaum 21, Formhaut 15 und Lackschicht 11 abgezogen werden.

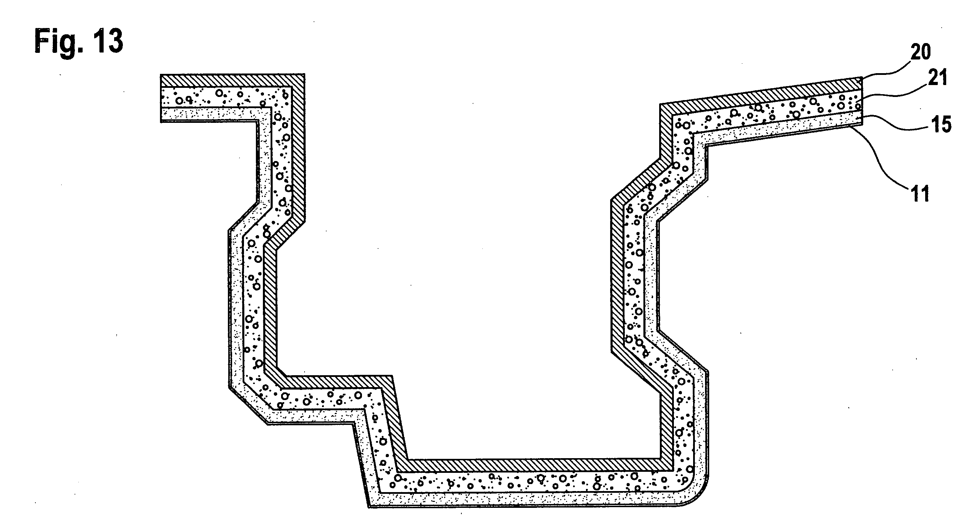

Nach dem Abziehen der Silikonhaut 3 wird der in Fig. 13 dargestellte Verbund aus einer mit einer Lackschicht 11 versehenen genarbten Polyurethanformhaut 15 und einem mit dieser fest verbundenen Formkörper aus Polyurethanschaumschicht 21 und Träger 20 erhalten. Die entfernte und noch unbeschädigte Silikonhaut 3 kann sofort wieder zur Herstellung eines neuen mit einer genarbten und gegebenenfalls lackierten Formhaut fest verbundenen Formkörpers verwendet werden.

## Patentansprüche

1. Verfahren zur Herstellung eines mit einer genarbten oder strukturierten Formhaut (15) fest verbundenen Formkörpers, **gekennzeichnet durch** folgende Verfahrensschritte:
a) Einlegen einer räumlich geformten und elastischen Haut (3), die auf ihrer Innenseite (3a) eine Narbung oder Strukturierung aufweist, in eine einseitig offene Aufnahmeform (7) eines Werkzeugunterteils, derart, dass die elastische Haut (3) mit ihrer Außenseite (3b) an der Innenwand der Aufnahmeform (7) anliegt und **durch** diese stabilisiert wird,
b) Auftragen einer flüssigen Kunststoffschicht in vorgegebener Schichtdicke auf die genarbte oder strukturierte Innenseite (3a) der elastischen Haut (3),
c) Aushärten der Kunststoffschicht, wobei sich die Formhaut (15) bildet,
d) Hinterschäumen der Formhaut (15) zur Bildung des Formkörpers und einer festen Verbindung zwischen Formkörper und Formhaut (15) **durch** Einbringen geeigneter reaktiver Schäumungsmittel in einen Zwischenraum (19), der **durch** die Innenseite der Formhaut (15) und ein in die Aufnahmeform (7) des Werkzeugunterteils eingefügtes, räumlich geformtes Werkzeugoberteil (17) begrenzt wird, wobei die Ausmaße des Zwischenraums (19) und damit des den Formkörper bildenden Schaums (21) von den Konturen der Formhaut (15) und des Werkzeugoberteils (17) vorgegeben werden, und wobei der Zwischenraum (19) während des Schäumungsprozesses von dem Werkzeugoberteil (17) abgedichtet wird,
e) Herausnehmen des gesamten Verbundes aus elastischer Haut (3), Formhaut (15) und Formkörper aus der Aufnahmeform (7) des Werkzeugunterteils, wobei das Werkzeugoberteil (17) entweder vor oder nach dem Herausnehmen des gesamten Verbundes entfernt wird und
f) Abziehen der elastischen Haut (3) von der mit dem Formkörper fest verbundenen Formhaut (15), wobei auf der Oberfläche der Formhaut (15) nach dem Abziehen der elastischen Haut (3) eine Narbung oder Strukturierung zurückbleibt.

2. Verfahren nach Anspruch 1, **dadurch gekennzeichnet, dass** das im Verfahrensschritt d) verwendete Werkzeugoberteil (17) einen lösbaren und räumlich geformten Träger (20) umfasst, durch den der Zwischenraum (19) wenigstens teilweise anstelle des Werkzeugoberteils (17) begrenzt wird, wobei die Ausmaße des Zwischenraums (19) von den Konturen der Formhaut (15) und wenigstens teilweise durch den am Werkzeugoberteil (17) angeordneten Träger (20) anstelle des Werkzeugoberteils (17) vorgegeben werden, und dass im Verfahrensschritt e) der gesamten Verbund aus elastischer Haut (3), Formhaut (15) und Formkörper mit eingebettetem Träger (20) aus der Aufnahmeform (7) des Werkzeugunterteils herausgenommen wird, wobei das Werkzeugoberteil (17) entweder vor oder nach dem Herausnehmen des gesamten Verbundes von dem Träger (20) gelöst und entfernt wird.

3. Verfahren nach Anspruch 1 oder 2, **dadurch gekennzeichnet, dass** als geeignete reaktive Schäumungsmittel solche Ausgangsstoffe verwendet werden, die vorzugsweise offenzellige Polyurethan-Schäume bilden.

4. Verfahren nach einem der Ansprüche 1 bis 3, **dadurch gekennzeichnet, dass** der Schäumungsprozess unter Wärmeeinwirkung erfolgt, und dass das Werkzeugoberteil (17) zu diesem Zweck über wenigstens einen im Werkzeugoberteil (17) verlaufenden Heizkanal beheizt wird.

5. Verfahren zur Herstellung eines mit einer genarbten oder strukturierten Formhaut (15) fest verbundenen Formkörpers, **gekennzeichnet durch** folgende Verfahrensschritte:
a) Einlegen einer räumlich geformten und elastischen Haut (3), die auf ihrer Innenseite (3a) eine Narbung oder Strukturierung aufweist, in eine einseitig offene Aufnahmeform (7) eines Werkzeugunterteils, derart, dass die elastische Haut (3) mit ihrer Außenseite (3b) an der Innenwand der Aufnahmeform (7) anliegt und **durch** die Innenwand stabilisiert wird,
b) Auftragen einer flüssigen Kunststoffschicht in vorgegebener Schichtdicke auf die genarbte oder strukturierte Innenseite (3a) der elastischen Haut (3),
c) Aushärten der Kunststoffschicht, wobei sich die Formhaut (15) bildet,
d) Verbinden eines als Träger (20) ausgebildeten Formkörpers mit der Formhaut (15), derart, dass ein Primer und/oder ein Klebstoff auf die Innenseite der Formhaut (15) aufgetragen wird und anschließend der Träger (20) als lösbares Teil eines Werkzeugoberteils (17) von dem Werkzeugoberteil (17) auf die mit dem Primer und/oder Klebstoff versehene Formhaut (15) gedrückt wird, wobei eine feste Verbindung zwischen Träger (20) und Formhaut (15) gebildet wird,
e) Herausnehmen des gesamten Verbundes aus elastischer Haut (3), Formhaut (15) und Formkörper aus der Aufnahmeform (7) des Werkzeugunterteils, wobei das Werkzeugoberteil (17) entweder vor oder nach dem Herausnehmen des gesamten Verbundes von dem als Träger (20) ausgebildeten Formkörper gelöst und entfernt wird, und
f) Abziehen der elastischen Haut (3) von der mit dem Formkörper fest verbundenen Formhaut (15), wobei auf der Oberfläche der Formhaut (15) nach dem Abziehen der elastischen Haut (3) eine Narbung oder Strukturierung zurückbleibt.

6. Verfahren nach Anspruch 5, **dadurch gekennzeichnet, dass** das Verbinden des als Träger (20) ausgebildeten Formkörpers mit der Formhaut (15) nicht wie in den Verfahrensschritten c) und d) erfolgt, sondern derart, dass der Träger (20) als ein lösbares Teil des Werkzeugoberteils (17) von dem Werkzeugoberteil (17) auf die noch nicht vollständig ausgehärtete Kunststoffschicht gedrückt wird, wobei erst nach dem vollständigen Aushärten der Kunststoffschicht eine feste Verbindung zwischen dem Träger (20) und der Formhaut (15) entsteht.

7. Verfahren nach einem der Ansprüche 1 bis 6, **dadurch gekennzeichnet, dass** die im Verfahrensschritt f) abgezogene elastische Haut (3) direkt wieder im Verfahrensschritt a) verwendet wird.

8. Verfahren nach einem der Ansprüche 1 bis 7, **dadurch gekennzeichnet, dass** das Auftragen der flüssigen Kunststoffschicht in vorgegebener Schichtdicke auf die genarbte oder strukturierte Innenseite (3a) der elastischen Haut (3) dadurch erfolgt, dass der flüssige Kunststoff in einen Zwischenraum (14) eingegossen oder eingespritzt wird, der durch die Innenseite (3a) der elastischen Haut (3) und ein in die Aufnahmeform (7) des Werkzeugunterteils eingefügtes, räumlich geformtes Werkzeugoberteil (12) begrenzt wird, wobei die Ausmaße des Zwischenraums (14) von den Konturen der elastischen Haut (3) und des Werkzeugoberteils (12) vorgegeben werden, und dass das Werkzeugoberteil (12) nach dem wenigstens teilweisen Aushärten der Kunststoffschicht wieder aus der Aufnahmeform (7) des Werkzeugunterteils entfernt wird.

9. Verfahren nach Anspruch 8, **dadurch gekennzeichnet, dass** das Aushärten der Kunststoffschicht unter Wärmeeinwirkung erfolgt, wobei das Werkzeugoberteil (12) zu diesem Zweck über wenigstens einen im Werkzeugoberteil (12) verlaufenden Heizkanal beheizt wird.

10. Verfahren nach einem der Ansprüche 1 bis 9, **dadurch gekennzeichnet, dass** zur Bildung der Kunststoffschicht vernetzbare Polyurethane, vorzugsweise Polyurethan-Gießharze, flüssige und vernetzbare Massen, vorzugsweise Epoxidharze, oder nicht reaktive geschmolzene Massen, vorzugsweise thermoplastische Polyurethane (TPU), thermoplastische Polyolefine (TPO), thermoplastische Elastomere (TPE), Polyvinylchlorid (PVC) oder Mischungen aus diesen Massen, verwendet werden.

11. Verfahren nach einem der Ansprüche 1 bis 9, **dadurch gekennzeichnet, dass** zur Bildung der Kunststoffschicht ein einoder mehrkomponentiges vernetzbares Polyurethansystem verwendet wird, das vorzugsweise auf aliphatischen oder besonders bevorzugt auf aromatischen Ausgangsstoffen basiert.

12. Verfahren nach einem der Ansprüche 1 bis 11, **dadurch gekennzeichnet, dass** nach Durchführung des Verfahrensschrittes a) eine dünne Lackschicht (11) als so genanntes In-Mould-Coating auf die genarbte Innenseite (3a) der elastischen Haut (3) aufgebracht und getrocknet bzw. gehärtet wird, und anschließend der Verfahrensschritt b) erfolgt, wobei die flüssige Kunststoffschicht nicht mehr direkt auf die Innenseite (3a) der elastischen Haut (3), sondern auf die dünne Lackschicht (11) aufgetragen wird.

13. Verfahren nach Anspruch 12, **dadurch gekennzeichnet, dass** verschiedene Bereiche der Innenseite (3a) der elastischen Haut (3) mit verschiedenfarbigen Lacken beschichtet werden.

14. Vorrichtung zur Durchführung des Verfahrens nach einem der Ansprüche 1 bis 13, **dadurch gekennzeichnet, dass** die räumlich geformte und elastische Haut (3), die auf ihrer Innenseite (3a) eine Narbung oder Strukturierung aufweist, eine flexible elastomere Polyurethan- oder Gummihaut, vorzugsweise aber eine flexible Silikonhaut ist.

15. Vorrichtung nach Anspruch 14, **dadurch gekennzeichnet, dass** in der elastischen Haut (3) verstärkende Elemente, insbesondere Gewebe, Kunststoff-, Textil- oder Glasfasern, angeordnet sind.

16. Vorrichtung nach Anspruch 14 oder 15, **dadurch gekennzeichnet, dass** die räumlich geformte und elastische Haut (3) dadurch herstellbar ist, dass ein flüssiges Silikonpräpolymer nach Auftragen auf ein genarbtes oder strukturiertes Positivmodell (1) durch eine Additions- und/oder Kondensationsreaktion vernetzt wird und anschließend vom Positivmodell (1) abgezogen wird, wobei die elastische Silikonhaut (3) das räumlich geformte Negativabbild der in den Verfahrenschritten b) und c) herzustellenden Formhaut (15) darstellt und auf ihrer Innenseite (3a) eine entsprechende Narbung oder Strukturierung aufweist.

17. Vorrichtung nach Anspruch 16, **dadurch gekennzeichnet, dass** die räumlich geformte und elastische Silikonhaut (3) dadurch herstellbar ist, dass auf der Außenseite (3b) der vom Positivmodell (1) abgezogenen Silikonhaut (3) derart viel Silikon entfernt wird, dass eine vorgegebene Schichtdicke der Silikonhaut (3) erhalten wird.

18. Vorrichtung nach Anspruch 16, **dadurch gekennzeichnet, dass** die räumlich geformte und elastische Silikonhaut (3) dadurch herstellbar ist, dass das flüssige Silikonpräpolymer in einen Zwischenraum (8) eines geschlossenen Werkzeugs eingebracht wird, der durch ein das Positivmodell (1) wiedergebendes Werkzeugoberteil und ein über das Positivmodell (1) bringbares, räumlich geformtes Werkzeugunterteil(6) begrenzt wird, wobei die Ausmaße des Zwischenraums (8) von den Konturen des Werkzeugunterteils (6) und Werkzeugoberteils vorgegeben werden, und dass nach dem Einbringen des Silikonpräpolymers in den Zwischenraum (6) die Vernetzung zur Silikonhaut (3) erfolgt.

19. Vorrichtung nach einem der Ansprüche 14 bis 18, **dadurch gekennzeichnet, dass** die elastische Haut (3) eine Schichtdicke zwischen 0,8 und 10 mm, vorzugsweise zwischen 1 und 6 mm, aufweist.

20. Vorrichtung nach einem der Ansprüche 14 bis 19, **dadurch gekennzeichnet, dass** die in einem der Verfahren nach den Ansprüchen 1 bis 13 verwendeten Werkzeugunterteile mehrteilig aufgebaut sind und/oder bewegliche Elemente (9a, 9b), insbesondere Schieber, Klappen oder Auswerfer, umfassen.

21. Vorrichtung nach einem der Ansprüche 14 bis 20, **dadurch gekennzeichnet, dass** die in einem der Verfahren gemäß den Ansprüchen 1 bis 13 verwendeten Werkzeugoberteile (12, 17) mehrteilig aufgebaut sind und/oder bewegliche Elemente (13a, 13b, 18a, 18b), insbesondere Schieber, Klappen oder Auswerfer, umfassen.

22. Vorrichtung nach einem der Ansprüche 14 bis 21 **dadurch gekennzeichnet, dass** die in einem der Verfahren gemäß den Ansprüchen 1 bis 13 verwendete Werkzeugunter- und/oder - oberteile (12, 17) Heizungskanäle umfassen, durch die das Werkzeugunter- und/oder -oberteil (12, 17) beheizbar ist.

23. Ein mit einer genarbten oder strukturierten und gegebenenfalls lackierten Formhaut (15) fest verbundener Formkörper, herstellbar durch ein Verfahren nach einem der Ansprüche 1 bis 13.

24. Ein mit einer genarbten Formhaut (15) fest verbundener Formkörper, herstellbar durch ein Verfahren nach Anspruch 8, wobei die Formhaut (15) eine Schichtdicke zwischen 0,3 und 5 mm, vorzugsweise aber zwischen 0,4 und 2 mm besitzt.

25. Verwendung eines mit einer genarbten Formhaut (15) fest verbundenen Formkörpers nach Anspruch 23 oder 24 als Bauteil innerhalb eines Fahrzeuginnenraums, insbesondere als Instrumententafel, Türverkleidung oder Handschuhfachabdeckung oder Mittelkonsole.
